# EUROPÄISCHE PATENTSCHRIFT

(11) **EP 1 810 794 B1**
(45) Veröffentlichungstag und Bekanntmachung des Hinweises auf die Patenterteilung: **27.08.2008**
(21) Anmeldenummer: 07100628.2
(22) Anmeldetag: 16.01.2007
(51) Int. Cl.: B25J 19/00, H02G 11/00

(54) **Tragvorrichtung für ein Schlauchpaket von Versorgungsleitungen eines Arbeitsroboters**
Carrier device for an umbilical tube harness for an industrial robot
Dispositif de support pour un faisceau de tuyaux d'alimentation d'un robot de travail

(30) Priorität: 19.01.2006 DE 102006002637
(43) Veröffentlichungstag der Anmeldung: 25.07.2007
(73) Patentinhaber: ThyssenKrupp Drauz Nothelfer GmbH, 74076 Heilbronn (DE)
(72) Erfinder: Hock, Klaus-Dieter, Remigiusstrasse 17 66424 Homburg (DE); Winter, Dominik, 66687 Nunkirchen (DE); Reineke, Günter, 28844 Weyhe (DE)
(74) Vertreter: Cohausz & Florack

(56) Entgegenhaltungen:
- EP-A1- 0 507 999
- EP-A2- 0 515 069
- WO-A-98/18590
- DE-A1- 10 146 833
- DE-U1- 8 703 229
- DE-U1- 9 005 779
- US-A- 1 514 544
- US-A- 2 267 209
- US-B1- 6 338 450

## Beschreibung

Die Erfindung betrifft eine Tragvorrichtung für ein Schlauchpaket von Versorgungsleitungen eines einen Bearbeitungskopf aufweisenden Arbeitsroboters, gemäß dem Oberbegriff des Anspruchs 1.

Ein Arbeitsroboter führt mit seinem Bearbeitungskopf bei der Bearbeitung eines Objektes, zum Beispiel einer Karosserie eines Kraftfahrzeuges, zum Teil sehr komplexe und schnelle Bewegungen aus, bei denen die Versorgungsleitungen, wie Lichtleitfaserkabel für Laserstrahlschweiß-, Laserstrahllöt- oder Laserstrahlschneidköpfe, Signalleitungen, elektrische Kabel, Wasser- und Prozessgasschläuche, beträchtlichen Zug- und Torsionsbelastungen ausgesetzt sind. Diese Belastungen machen es erforderlich, das Schlauchpaket nach einer verhältnismäßig kurzen Betriebszeit im Rahmen einer vorbeugenden Wartung auszutauschen.

Bei herkömmlichen Tragvorrichtungen für ein Schlauchpaket von Versorgungsleitungen der eingangs genannten Art ist vorgesehen, dass die am Bearbeitungskopf angeschlossenen Versorgungsleitungen von einem Kompensator getragen sind, der entweder an der Decke einer Bearbeitungskabine, in der sich der Bearbeitungsroboter befindet, oder einem in die Bearbeitungskabine hineinragenden Kragarm angebunden ist. Eine solche Anordnung hat den Vorteil, dass die Versorgungsleitungen von oben kommen und sowohl bei einer hoch gelegenen als auch niedrig gelegenen Arbeitsstelle hochgehalten werden, so dass sie bei der Bearbeitung nicht störend im Weg liegen. Nachteilig bei dieser Art von Tragvorrichtung ist allerdings, dass für Wartungsarbeiten das Wartungspersonal mittels Steig- und Hubgeräten an die hoch gelegenen Orte des Trägers und des Kompensators gebracht werden muss oder in der Bearbeitungskabine begehbare Bühnen mit Geländer und Treppenaufgängen in der Höhe des Trägers und des Kompensators fest installiert sein müssen. Diese Vorkehrungen für Wartungsarbeiten sind sowohl aufwendig hinsichtlich der für die Wartung benötigten Zeit als auch hinsichtlich der Kosten für die Installation der Bühnen und dergleichen.

Mit dieser Problematik bei Wartungsarbeiten beschäftigt sich eine bekannte Tragvorrichtung der eingangs genannten Art nicht (DE 87 03 229 U1). Bei dieser Tragvorrichtung ist der Träger als Kragarm einer Säule getragen. Ob die Säule eine Verschwenkung oder Absenkung des Kragarms zulässt, ist in diesem Stand der Technik nicht dargestellt und nicht beschrieben. Aber selbst wenn die Säule absenkbar wäre, wäre eine Absenkung wegen des Steuerkastens, auf dem die Säule aufgebaut ist, allenfalls bis auf noch recht hohem Niveau möglich. In jedem Fall ist eine solche Halterung des als Kragarm ausgebildeten Trägers an einer Säule recht aufwendig.

Aus der EP 0 515 069 A2, die den Oberbegriff des Ansprunchs 1 entspricht, ist ferner ein Kragarm für eine am äußeren Ende des Kragarms aufgehängte Bearbeitungseinreichtung, beilspielsweise eine Schweißeinrichtung, offenbart. Dieser trägt Versorgungsleitungen für die Schweißeinrichtung, wobei die Versorgungsleitungen unter Bildung mehrerer Schlaufen über Ringe an dem Kragarm aufgehängt sind. Um die Höhe des Kragarms zu variieren, ist dieser über einen motorbetriebenen Seilzug entlang einer vertikal angeordneten Schiene verfahrbar. Nachteilig ist dabei, dass die äußeren Stopppositionen in der Höhenverstellung des Kragarms zu Undefiniert sind, so dass hierdurch die Vertikalfixierung des Kragarms beispielsweise nach erfolgten Wartungsarbeiten nicht ausreichend ist.

Der Erfindung liegt die Aufgabe zugrunde, eine Tragvorrichtung zu schaffen, die sowohl mit vergleichsweise geringem Aufwand Wartungsarbeiten am Schlauchpaket des Arbeitsroboters ermöglicht und auch die Fixierung des Trägers erleichtert.

Diese Aufgabe wird mit einer Tragvorrichtung der eingangs genannten Art durch die Merkmale der Anspruchs 1 gelöst.

Bei der erfindungsgemäßen Tragvorrichtung lassen sich Wartungsarbeiten schnell, ungefährlich und mit geringstem vorrichtungstechnischen Aufwand durchführen. Einerseits gewährleistet der an Zugmitteln aufgehängte und an den speziellen Führungsanschlägen fixierte Träger eine definierte Position für den Kompensator oberhalb des Arbeitsroboters und andererseits die leichte Zugänglichkeit des Schlauchpaketes vom Bodenniveau aus. Der vorrichtungstechnische Aufwand ist im Vergleich zu Arbeitsbühnen und dergleichen gering, weil nur Führungsanschläge und Zugmittel für die Fixierung und leichte Zugänglichkeit erforderlich sind.

Die Zugmittel sind vorzugsweise ein Seilzug, der über Umlenkrollen zu einer Seilwinde auf Bodenniveau führt.

Um den gesamten Arbeitsraum von den Versorgungsleitungen freizuhalten, sollte der Träger bis zur Seitenwand der Kabine reichen, in der der Arbeitsroboter aufgestellt ist, und die vom Schlauchpaket zu ihren Versorgungseinheiten führenden Schläuche, Leitungen und/oder Kabel sollten längs der Kabinenwand geführt sein.

Im Folgenden wird die Erfindung anhand einer Zeichnung näher erläutert, die in schematischer Darstellung eine Kabine mit einem Arbeitsroboter zeigt. Im einzelnen zeigen:

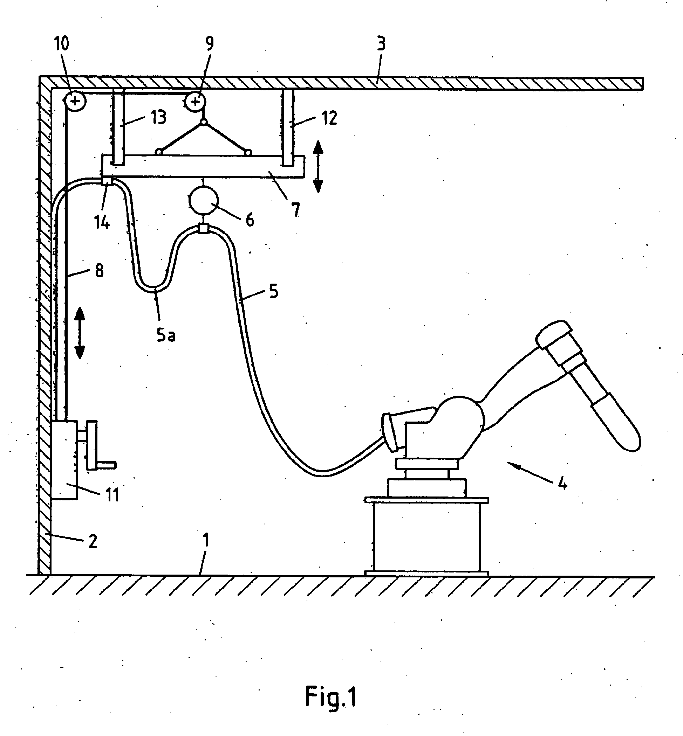

- Fig. 1: eine Kabine mit Arbeitsroboter und Tragvorrichtung für ein von einem Träger getragenes Schlauchpaket in Betriebsstellung im Vertikalschnitt und
- Fig. 2: die Kabine gemäß Fig. 1 mit dem vom Träger getragenen Schlauchpaket in Wartungsstellung im Vertikalschnitt.

In einer Bearbeitungskabine mit Boden 1, Seitenwand 2 und Decke 3 ist ein Bearbeitungsroboter 4 mit einem Bearbeitungskopf 4a aufgestellt. Der Arbeitsroboter 4 ist für sehr komplexe Bewegungen seines Arbeitskopfes 4a ausgelegt, so dass er die unterschiedlichsten Positionen an einem nicht dargestellten Werkstück, zum Beispiel einer Kraftfahrzeugkarosserie, erreichen und dort die erforderlichen Arbeiten ausführen kann. Eine typische Bearbeitungsart des Bearbeitungskopfes ist das Laserstrahlschweißen.

Damit der Bearbeitungskopf 4a die notwendigen Bearbeitungen vornehmen kann, wird er von nicht dargestellten Versorgungseinheiten über ein Schlauchpaket 5 versorgt. Das Schlauchpaket 5 kann Lichtleitkabel für Laserstrahlung, Signalleitungen, elektrische Kabel, Wasser- und Prozessgasschläuche umfassen. Eine Besonderheit des Schlauchpaketes 5 besteht darin, dass der mit dem Bearbeitungskopf verbundene Schlauchpaketabschnitt nicht von der Seite sondern von oben kommt, so dass der Arbeitsraum des Arbeitsroboters, wo das zu bearbeitende Werkstück, insbesondere eine Karosserie, aufgestellt ist, von störenden Schläuchen frei ist.

Das Schlauchpaket 5 ist über einen Kompensator 6 an einem als Traverse ausgebildeten Träger 7 befestigt. Der Träger 7 ist an Zugmitteln 8 aufgehängt, die als Seilzug ausgebildet sind und über an der Decke 3 gehaltenen Umlenkrollen 9, 10 zu einer Seilwinde 11 auf Bodenniveau führen. Mittels dieser Zugmittel 8 wird der Träger 7 gegen an der Decke 3 ortsfest befestigte Führungsanschläge 12, 13 gezogen, die unten gabelförmig ausgebildet sind, um so den als Traverse ausgebildeten Träger 7 auf beiden gegenüberliegenden Seiten formschlüssig erfassen zu können. Auf diese Art und Weise lässt sich der Träger 7 räumlich exakt positionieren.

Das Schlauchpaket 5 ist einerseits mit Haltemitteln 14 am Träger 7 befestigt und ist andererseits vom Kompensator 6 unter Bildung einer Schlaufe 5a gehalten. Der Kompensator 6 erlaubt es, dass bei auf die Versorgungsleitungen vom Bearbeitungskopf 4a ausgeübten Zug den Versorgungsleitungen nachgegeben wird. Dies lässt sich auf verschiedene Weise realisieren. Entweder ist das Schlauchpaket 5 am Kompensator 6 fixiert und der Kompensator 6 federnd am Träger aufgehängt, oder der Kompensator 6 ist am Träger fixiert und hält über einen Federzug das Schlauchpaket 5. In beiden Fällen ist es unter Ausnutzung der Schlaufe 5a möglich, einerseits das Schlauchpaket 5 hochzuhalten und andererseits in der Länge nachzugeben, je nachdem, ob der Bearbeitungskopf aufgrund seiner Stellbewegungen dies verlangt oder nicht.

Da der als Traverse ausgebildete Träger 7 von der Kabinenmitte bis in die Nähe der Seitenwand 2 reicht, ist gewährleistet, dass auch das Teilstück des Schlauchpaketes 5, das zu den nicht dargestellten Versorgungseinheiten führt, nicht störend im Raum liegt, sondern im Wesentlichen längs der Seitenwand 2 verläuft.

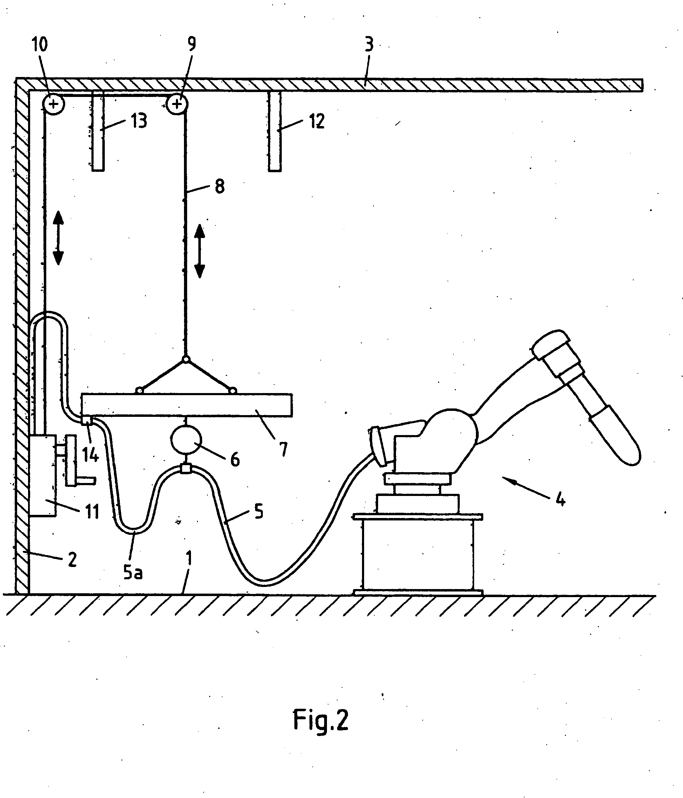

Wie Fig. 2 zeigt, lässt sich in der herabgelassenen Wartungsposition des Trägers 7 das Schlauchpaket 5 an den für den Austausch notwendigen Stellen vom Bedienungspersonal vom Bodenniveau aus erreichen, so dass die Austauscharbeiten ungefährlich und schnell möglich sind.

## Patentansprüche

1. Tragvorrichtung für ein Schlauchpaket (5) von Versorgungsleitungen eines einen Bearbeitungskopf (4a) aufweisenden Arbeitsroboters (4), bei der das Schlauchpaket (5) hoch über dem Arbeitsroboter (4) einerseits an einem von einer Traverse gebildeten Träger (7) und unter Bildung einer Schlaufe (5a) andererseits an einem am Träger (7) mittels Haltemitteln gehaltenen Kompensator (6) aufgehängt ist, wobei der Kompensator (6) den am Bearbeitungskopf (4a) angeschlossenen Versorgungsleitungen bei auf sie einwirkendem Zug nachgeben kann, wobei der Träger (7) an Zugmitteln (8) aufgehängt ist,
**dadurch gekennzeichnet, dass**
der Träger (7) mittels dieser Zugmittel (8) aus einer hohen, an ortsfesten Führungsanschlägen (12, 13) fixierten Betriebsstellung in eine untere Wartungsstellung auf Bodenniveau absenkbar ist, wobei die Führungsanschläge (12, 13) gabelförmig ausgebildet sind, deren Zinken auf die Breite des als Traverse ausgebildeten Trägers (7) abgestimmt sind.

2. Tragvorrichtung nach Anspruch 1,
**dadurch gekennzeiehnet, dass**
die Zugmittel (8) ein Seilzug sind, der über Umlenkrollen (9, 10) zu einer Seilwinde (11) auf Bodenniveau führt.

3. Tragvorrichtung nach Anspruch 1 oder 2,
**dadurch gekennzeichnet, dass**
der als Traverse ausgebildete Träger (7) bis zur Seitenwand (2) einer Kabine reicht, in der der Arbeitsroboter (4) aufgestellt ist, und die vom Schlauchpaket (5) zu ihren Versorgungseinheiten führenden Schläuche, Leitungen und/oder Kabel längs der Kabinenwand (2) geführt sind.

## Claims

1. A supporting device for a hose package (5) of supply lines of a working robot (4) having a processing head (4a) in which the hose package (5) is suspended high above the working robot (4) on the one hand on a support (7) formed by a traverse and on the other hand on a compensator (6) held on the support (7) by means of retaining means, forming a loop (5a), wherein the compensator (6) can allow the supply lines connected to the processing head (4a) to slip through when tension is acting upon them, wherein the support (7) is suspended on tension means (8),
**characterised in that** the support (7) can be lowered by means of these tension means (8) from a high operating position fixed on fixed guide stops (12, 13) to a lower maintenance position at ground level, wherein the guide stops (12, 13) are formed in a fork shape, their tines being matched to the width of the support (7) configured as a traverse.

2. The supporting device according to claim 1, **characterised in that** the tension means (8) are a cable which leads over guide rollers (9, 10) to a cable winch (11) at ground level.

3. The supporting device according to claim 1 or 2,
**characterised in that** the support (7) configured as a traverse extends as far as the side wall (2) of a cabin in which the working robot (4) is set up and the hoses, lines and/or cable leading from the hose package (5) to their supply units are guided along the cabin wall (2).

## Revendications

1. Dispositif de support pour un faisceau de tuyaux (5) d'alimentation d'un robot de travail (4) comprenant une tête de travail (4a), dans lequel le faisceau de tuyaux (5) est suspendu en hauteur au-dessus du robot de travail (4), d'une part à un support (7) formé par une traverse et d'autre part, avec formation d'une boucle (5a), à un compensateur (6) maintenu sur le support (7) par des moyens de retenue, le compensateur (6) pouvant détendre le faisceau de tuyaux relié à la tête de travail (4a) lorsqu'une traction est exercée sur celui-ci, le support (7) étant suspendu à des moyens de traction (8),
**caractérisé en ce que** le support (7) peut être abaissé, depuis une position de travail haute, fixée à des butées de guidage (12, 13), dans une position d'attente basse, au niveau du sol, les butées de guidage (12, 13) étant réalisées sous la forme de fourches, dont les dents sont adaptées à la largeur du support (7) réalisé sous la forme d'une traverse.

2. Dispositif de support selon la revendication 1, **caractérisé en ce que** les moyens de traction (8) sont un câble de traction qui aboutit à un enrouleur de câble (11) au niveau du sol, en passant par des rouleaux de renvoi (9, 10).

3. Dispositif de support selon la revendication 1 ou 2, **caractérisé en ce que** le support (7) réalisé sous la forme d'une traverse s'étend jusqu'à la paroi latérale (2) d'une cabine, dans laquelle est installé le robot de travail (4), et les tuyaux, conduites et/ou câbles aboutissant à ses boîtiers d'alimentation sont guidés le long de la paroi (2) de la cabine.
